# EUROPEAN PATENT SPECIFICATION

(11) **EP 3 407 359 B1**
(45) Date of publication and mention of the grant of the patent: **20.09.2023**
(21) Application number: 16885645.8
(22) Date of filing: 21.01.2016
(51) Int. Cl.: G21C 21/10, G21C 21/02, G21C 3/04, G21C 1/07, G21C 3/62

(54) **SPHERICAL FUEL ELEMENT FORMING APPARATUS**
VORRICHTUNG ZUR FORMUNG EINES KUGELFÖRMIGEN BRENNELEMENTS
APPAREIL DE FORMATION D'ÉLÉMENT COMBUSTIBLE SPHÉRIQUE

(43) Date of publication of application: 28.11.2018
(73) Proprietor: Tsinghua University, Haidian District Beijing 100084 (CN)
(72) Inventor: LIU, Bing, Beijing 100084 (CN); ZHANG, Jie, Beijing 100084 (CN); LU, Zhenming, Beijing 100084 (CN); ZHOU, Xiangwen, Beijing 100084 (CN); TANG, Yaping, Beijing 100084 (CN); TANG, Chunhe, Beijing 100084 (CN); ZHANG, Zuoyi, Beijing 100084 (CN)
(74) Representative: Loock, Jan Pieter
(86) International application number: PCT/CN2016/071573
(87) International publication number: WO 2017/124372

(56) References cited:
- WO-A1-2004/047120
- CN-A- 101 573 765
- CN-A- 102 280 152
- CN-A- 102 689 450
- CN-A- 104 496 487
- CN-A- 105 185 418
- CN-A- 105 185 418
- CN-B- 102 689 450
- DE-A1- 19 837 989
- DE-B1- 2 654 536

## Description

### FIELD OF TECHNOLOGY

The present disclosure relates to the technical field of nuclear reactor fuel element preparation, and particularly to a spherical fuel element forming apparatus.

### BACKGROUND

At present, the spherical fuel element used in pebble-bed High Temperature Gas-Cooled Reactor (HTR) has a diameter of 60mm, and includes fuel area and fuel-free area. The spherical fuel element as a whole is a graphite matrix, and the outer layer thereof is a fuel-free area with a thickness of about 5 mm. The basic structure of the spherical fuel element is that the fuel-free graphite spherical shell is filled with a dispersion fuel consisting of coated fuel particles and the graphite matrix.

The preparation process of the spherical fuel element includes: preparing matrix graphite powder, overcoating coated particles, pressing core sphere, pressing green sphere, turning, carbonization and high temperature purification, wherein the forming of green sphere fuel area and fuel-free area is the core technology in the spherical element manufacturing process. The process of forming the spherical fuel element includes mixing overcoated particles with the matrix graphite powder, charging the mixture into a rubber die and pressing into a core sphere, molding the fuel-free area in a final-pressing die, and finally obtaining the green which is slightly bigger than a target size by final-pressing. However, the prior art does not disclose specifically how to form the spherical fuel element, including how to mix the overcoating particles with the matrix graphite powder, how to press into the core sphere and how to form the spherical fuel element finally. Chinese patent application CN201210177503 discloses a quasi-isostatic pressing vacuum hydraulic machine, which is used for pressing the green of the spherical fuel element, but does not disclose other steps of forming the spherical fuel element, including the mixing of the overcoated particles and matrix graphite powder, and the technologies and apparatus used in the process of molding the fuel-free area in the final-pressing die etc. Therefore, it is of great importance to provide a spherical fuel element forming apparatus which is able to reduce the fuel element cost, has a compact structure and is convenient to operate. Documents DE 26 54 536 B1, CN 105 185 418 A and DE 198 37 989 A1 are dedicated to the production of nuclear fuel.

### SUMMARY

The technical problem to be solved by the present disclosure is to provide a spherical fuel element forming apparatus which has a compact structure and is convenient to operate.

For this purpose, the present disclosure provides a spherical fuel element forming apparatus according to claim 1.

The fuel area forming system is used for evenly mixing a core sphere matrix powder with nuclear fuel particles and then pressing the mixed core sphere matrix powder and nuclear fuel particles into core spheres.

The fuel-free area shaping system is used for preparing a spherical fuel element from the core spheres covered by a fuel-free matrix powder.

The green sphere pressing system is used for pressing the spherical fuel elements into green spheres.

According to the invention, the fuel area forming system comprises a core sphere matrix powder quantitative conveying device, a nuclear fuel particle evenly-distributing device, a nuclear fuel particle accurate quantification device, a primary stirring device, a discharge molding device, a secondary stirring device and a core sphere pressing device arranged sequentially. The core sphere matrix powder quantitative conveying device, the nuclear fuel particle accurate quantification device, the primary stirring device and the discharge molding device are connected by a material canister workstation conveying device.

The core sphere matrix powder quantitative conveying device quantitatively conveys the core sphere matrix powder to the material canister workstation conveying device. The nuclear fuel particle evenly-distributing device and nuclear fuel particle accurate quantification device precisely and quantitatively conveys the nuclear fuel to the material canister workstation conveying device. The material canister workstation conveying device conveys the core sphere matrix powder and nuclear fuel to the primary stirring device. The primary stirring device stirs the core sphere matrix powder and nuclear fuel evenly. The material canister workstation conveying device conveys the core sphere matrix powder and nuclear fuel that passed through the primary stirring device to the discharge molding device. The discharge molding device fills a core sphere die with the core sphere matrix powder and nuclear fuel that are stirred evenly. The secondary stirring device stirs the core sphere matrix powder and nuclear fuel in the core sphere die.

The core sphere pressing device presses the core sphere matrix powder and nuclear fuel in the core sphere die into core spheres.

Preferably, the core sphere matrix powder quantitative conveying device comprises a first hopper for storing the core sphere matrix powder, and a spiral feeder at a bottom of the hopper, wherein a conveying amount of the core sphere matrix powder is controlled by a feeding time of the spiral feeder.

Preferably, the nuclear fuel particle evenly-distributing device comprises a rotatable second hopper for receiving nuclear fuel, a distribution tube connected with the second hopper and a plurality of columnar containers for receiving the nuclear fuel distributed by the distribution tube.

The nuclear fuel particle accurate quantification device comprises a balance with a bottom-suspension function, a weighing hopper suspended at a bottom of the balance and a vibrating feeder for adding nuclear fuel into the weighing hopper and capable of storing nuclear fuel.

The bottoms of the columnar containers are provided with tubes, through which the nuclear fuel in the columnar containers which are rotated in place is conveyed to the weighing hopper by rotations of the plurality of columnar containers.

Preferably, the material canister workstation conveying device comprises an infrared position sensor, a chain driven by a motor and a plurality of material canisters mounted on the chain. The infrared position sensor is used for determining whether the opens of the plurality of material canisters correspond to a conveying port of the core sphere matrix powder quantitative conveying device, a discharge port of a weighing hopper of the nuclear fuel particle accurate quantification device, the primary stirring device and the discharge molding device respectively.

Preferably, the secondary stirring device comprises a base plate for placing the core sphere die which is filled with the core sphere matrix powder and nuclear fuel, a bracket and a rotatable stirring head mounted on the bracket The stirring head extends into an inner cavity of the core sphere die.

Under working conditions, the stirring head is driven by a motor to stir the core sphere matrix powder and nuclear fuel in the core sphere die. The base plate is driven by the motor to rotate, and a rotation direction of the base plate is opposite to that of the stirring head.

Preferably, the core sphere pressing device comprises an outer sleeve which can move up and down, an upper punch fixed in the outer sleeve and an lower punch which can move up and down. An outer diameter of the core sphere die is the same as an inner diameter of the outer sleeve, an outer diameter of the upper punch and an outer diameter of the lower punch respectively.

According to the invention, the fuel-free area shaping system comprises a core sphere positioning-conveying device, a core sphere positioning-transferring device, a fuel-free area matrix powder quantitative conveying device and a fuel-free area shaping device arranged sequentially. The core sphere positioning-conveying device is connected with the fuel-free area shaping device through the core sphere positioning-transferring device. The fuel-free area matrix powder quantitative conveying device is connected with the fuel-free area shaping device.

The core sphere positioning-conveying device and core sphere positioning-transferring device transfer the core spheres to the fuel-free area shaping device. The fuel-free area matrix powder quantitative conveying device conveys the matrix powder to the fuel-free area shaping device. The fuel-free area shaping device coats the core spheres with the matrix powder so as to prepare the spherical fuel element.

Preferably, the core sphere positioning-conveying device comprises a disc which can be rotated positionally, wherein a plurality of bosses for placing the core spheres are distributed evenly on the disc.

The core sphere positioning-transferring device comprises a mechanical gripper and a mechanical arm for moving the mechanical gripper in a horizontal or vertical direction, wherein a moving range in the horizontal direction of the mechanical gripper is from right above the bosses of the core sphere positioning-conveying device to right above a die of the fuel-free area shaping device.

Preferably, the fuel-free area shaping device comprises a movable base plate for placing a die, a probe for detecting a level of matrix powder and an arc-shaped scraper for shaping the spherical fuel element. The center of the arc-shaped scraper is on a vertical axis of the die.

The spherical fuel element forming apparatus provided by the present disclosure is distributed according to a technical process flow line operation, is compact in structure and convenient to operate. All of the connections of the devices are reasonable. The apparatus operation has a good logical relationship and easily realizes automation. With the fuel-free area shaping system, the sphere greens after being finally pressed are high in sphericity. Only few finish allowance is needed, and the waste of graphite matrix powder is reduced and the fuel element cost lowered. In addition, with the nuclear fuel evenly-distributing device and nuclear fuel particle accurate quantification device, the obtained ratio of nuclear fuel and matrix powder is precise, therefore the finished product rate of the spherical fuel elements prepared by the spherical fuel element forming apparatus of the present disclosure is high.

### BRIEF DESCRIPTION OF THE DRAWINGS

FIG. 1 is a structure diagram of the fuel area forming system and fuel-free area shaping system of the present disclosure;
FIG. 2 is a structure diagram of the fuel area forming system according to an embodiment of the present disclosure;
FIG. 3 is a section view of the nuclear fuel particle evenly-distributing device according to an embodiment of the present disclosure;
FIG. 4 is a section view of the material canister workstation conveying device according to an embodiment of the present disclosure;
FIG. 5 is a structure diagram of the secondary stirring device according to an embodiment of the present disclosure;
FIG. 6 is a section view of the core sphere pressing device according to an embodiment of the present disclosure;
FIG. 7 is a structure diagram of the fuel-free area shaping system according to an embodiment of the present disclosure;
FIG. 8 is a 3-D structure diagram of the fuel-free area shaping system according to an embodiment of the present disclosure.

### DETAILED DESCRIPTION

The embodiments of the present disclosure will be described in detail with reference to the accompanying drawings hereinafter.

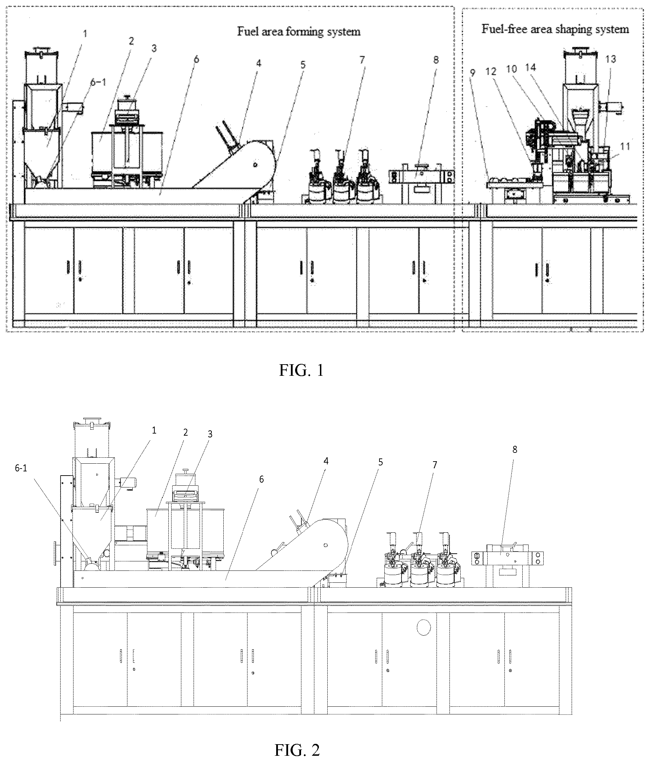

As shown in FIG. 1, a spherical fuel element forming apparatus, comprising: a fuel area forming system, a fuel-free area shaping system and a green sphere pressing system connected sequentially. The fuel area forming system is used for evenly mixing a core sphere matrix powder with nuclear fuel particles and then pressing the mixed core sphere matrix powder and nuclear fuel particles into core spheres. The fuel-free area shaping system is used for preparing a spherical fuel element from the core spheres covered by a fuel-free matrix powder. The green sphere pressing system is used for pressing the spherical fuel elements into green spheres.

Specifically, as shown in FIG. 2, the fuel area forming system comprises a core sphere matrix powder quantitative conveying device 1, a nuclear fuel particle evenly-distributing device 2, a nuclear fuel particle accurate quantification device 3, a primary stirring device 4, a discharge molding device 5, a secondary stirring device 7 and a core sphere pressing device 8 arranged sequentially. The core sphere matrix powder quantitative conveying device 1, nuclear fuel particle accurate quantification device 3, primary stirring device 4 and discharge molding device 5 are connected by a material canister workstation conveying device 6. The core sphere matrix powder quantitative conveying device 1 quantitatively conveys the core sphere matrix powder to the material canister workstation conveying device 6. The nuclear fuel particle evenly-distributing device 2 and nuclear fuel particle accurate quantification device 3 precisely and quantitatively conveys the nuclear fuel to the material canister workstation conveying device 6. The material canister workstation conveying device 6 conveys the core sphere matrix powder and nuclear fuel to the primary stirring device 4. The primary stirring device 4 stirs the core sphere matrix powder and nuclear fuel evenly. The material canister workstation conveying device 6 conveys the core sphere matrix powder and nuclear fuel that passed through the primary stirring device 4 to the discharge molding device 5. The discharge molding device 5 fills a core sphere die 7-0 with the core sphere matrix powder and nuclear fuel that are stirred evenly. The secondary stirring device 7 stirs the core sphere matrix powder and nuclear fuel in the core sphere die. The core sphere pressing device 8 presses the core sphere matrix powder and nuclear fuel in the core sphere die into core spheres.

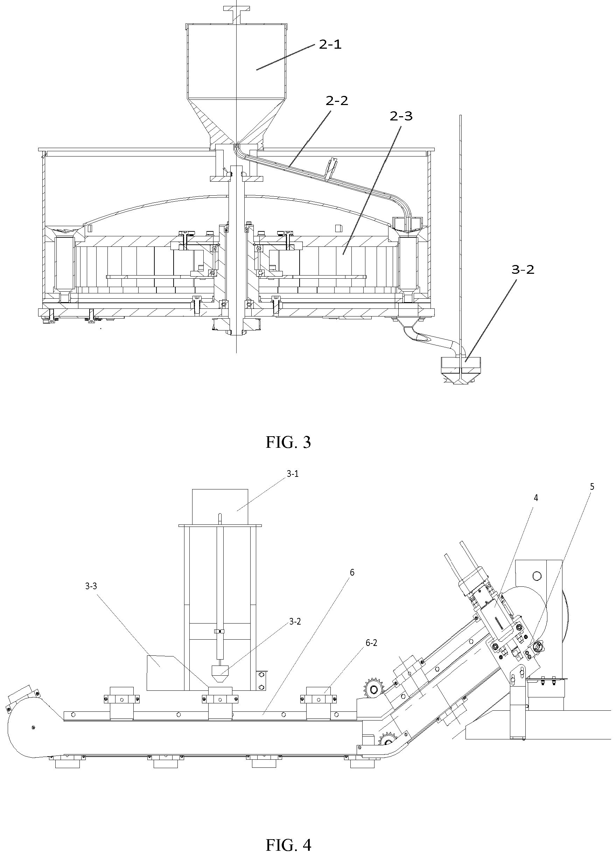

Wherein preferably, the core sphere matrix powder quantitative conveying device 1 comprises a first hopper for storing the core sphere matrix powder and a spiral feeder at the bottom of the hopper, the conveying amount of the core sphere matrix powder is controlled by the feeding time of the spiral feeder. As shown in FIG. 3, the nuclear fuel particle evenly-distributing device 2 comprises a rotatable second hopper 2-1 for receiving the nuclear fuel, a distribution tube 2-2 connected with the second hopper 2-1 and a plurality of columnar containers 2-3 for receiving the nuclear fuel distributed by the distribution tube. The plurality of columnar containers 2-3 are integrally rotatable. Preferably, the plurality of columnar containers 2-3 have a number of 50, and are arranged on a distribution plate. The plurality of columnar containers 2-3 are rotated by the rotation of the distribution plate. As shown in FIG. 4, the nuclear fuel particle accurate quantification device 3 comprises a balance 3-1 with a bottom-suspension function, a weighing hopper 3-2 suspended at the bottom of the balance and a vibrating feeder 3-3 for adding nuclear fuel into the weighing hopper and capable of storing nuclear fuel. The bottoms of the columnar containers 2-3 are provided with tubes, through which the nuclear fuel in the columnar containers 2-3 which are rotated in place is conveyed to the weighing hopper 3-2 by the rotatable plurality of columnar containers 2-3.

Wherein preferably, as shown in FIG. 4, the material canister workstation conveying device 6 comprises an infrared position sensor, a chain driven by a motor and a plurality of material canisters 6-2 mounted on the chain; the infrared position sensor is for determining whether the opens of the plurality of material canisters 6-2 correspond to the conveying port 6-1 of the core sphere matrix powder quantitative conveying device, the discharge port of the weighing hopper 3-2 of the nuclear fuel particle accurate quantification device 3, the primary stirring device 4 and the discharge molding device 5 respectively. By the motor driving the chain, the plurality of material canisters 6-2 on the chain are conveyed to the primary stirring device 4 through the conveying port 6-1 of the core sphere matrix powder quantitative conveying device 1 and the discharge port of the weighing hopper 3-2 of the nuclear fuel particle accurate quantification device 3, and the mixed material after the primary stirring is conveyed to the discharge molding device 5.

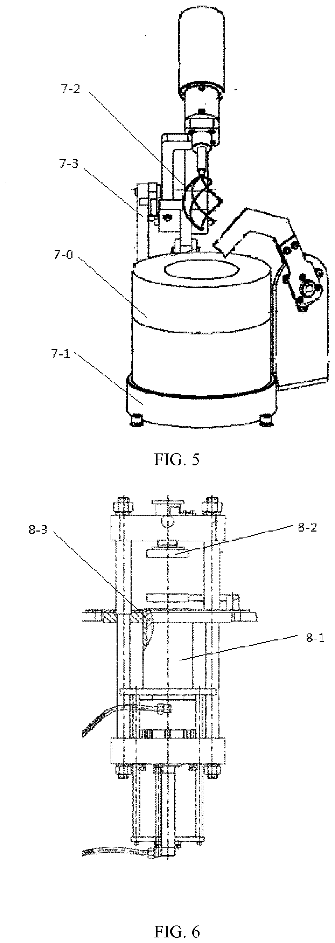

Wherein preferably, as shown in FIG. 5, the secondary stirring device 7 comprises a base plate 7-1 for placing the core sphere die 7-0 which is filled with the core sphere matrix powder and nuclear fuel, a bracket 7-3 and a rotatable stirring head 7-2 mounted on the bracket; the stirring head 7-2 extends into the inner cavity of the core sphere die; under working conditions, the stirring head 7-2 is driven by a motor to stir the core sphere matrix powder and nuclear fuel in the core sphere die; the base plate 7-1 is driven by a motor and rotatable, the rotation direction of the base plate 7-1 is opposite to that of the stirring head 7-2.

Wherein preferably, as shown in FIG. 6, the core sphere pressing device 8 comprises an outer sleeve 8-1 which can move up and down, an upper punch 8-2 fixed in the outer sleeve 8-1 and an lower punch 8-3 which can move up and down; the outer diameter of the core sphere die is the same as the inner diameter of the outer sleeve 8-1, the outer diameter of the upper punch 8-2 and the outer diameter of the lower punch 8-3 respectively. The outer sleeve 8-1 may move up and down by a cylinder, the length of stroke is not greater than 300mm, the lower punch 8-3 may move up and down by hydraulic pressure, the pressure on the punch may be 40-120KPa.

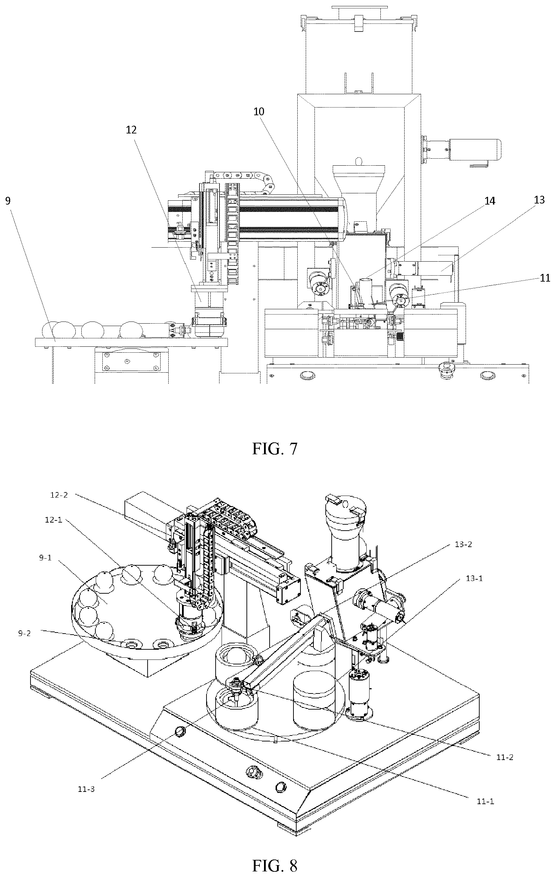

Specifically, as shown in FIG. 7, the fuel-free area shaping system comprises a core sphere positioning-conveying device 9, a core sphere positioning-transferring device 12, a fuel-free area matrix powder quantitative conveying device and a fuel-free area shaping device; the core sphere positioning-conveying device 9 and core sphere positioning-transferring device 12 are used for transferring the core spheres to the fuel-free area shaping device; the fuel-free area matrix powder quantitative conveying device is used for conveying the matrix powder to the fuel-free area shaping device; the fuel-free area shaping device is used for coating the core spheres with the matrix powder so as to prepare the spherical fuel element.

Wherein preferably, as shown in FIG. 8, the core sphere positioning-conveying device 9 comprises a disc 9-1 which can be rotated positionally, a plurality of bosses 9-2 for placing the core spheres are distributed evenly on the disc 9-1; preferably, the bosses 9-2 for placing the core spheres with a number of 12 are distributed evenly on the disc 9-1, the disc 9-1 can be rotated positionally by cylinder drive. The core sphere positioning-transferring device 12 comprises a mechanical gripper 12-1 and a mechanical arm 12-2 for moving the mechanical gripper 12-1 in a horizontal or vertical direction; the mechanical gripper 12-1 can move to be right above the bosses 9-2 of the core sphere positioning-conveying device 9 and right above the die of the fuel-free area shaping device in the horizontal direction. Preferably, the fuel-free area shaping device comprises a lower hemisphere fuel-free area shaping device 11 and an upper hemisphere fuel-free area shaping device 14. The fuel-free area matrix powder quantitative conveying device comprises a lower hemisphere fuel-free area matrix powder quantitative conveying device 10 and an upper hemisphere fuel-free area matrix powder quantitative conveying device 13. An end in the horizontal direction along the mechanical arm 12-2 of the mechanical gripper 12-1 is right above a place where the core sphere positioning-conveying device 9 places a core sphere, the other end is right above the die of the upper hemisphere fuel-free area shaping device 14. The device can perform actions such as grabbing, lifting, horizontally moving, lowering, placing the core spheres etc.

Wherein preferably, the fuel-free area shaping device comprises a movable base plate 11-1 for placing a die, a probe for detecting the level of matrix powder and an arc-shaped scraper 11-3 for shaping the spherical fuel element; the center of the arc-shaped scraper 11-3 is on the vertical axis of the die. Preferably, the lower hemisphere fuel-free area shaping device 11 comprises a rotatable base plate 11-1 for placing the lower half die of a final-pressing die, a bracket 11-2 which is driven by a cylinder and can move up and down, and an arc-shaped scraper 11-3 fixed vertically below the bracket, the base plate 11-1 is driven by a motor to rotate. A pair of probes for detecting the level of matrix powder is provided below the movable bracket 11-2, when the matrix powder reaches the probes, the lower hemisphere fuel-free area matrix powder quantitative conveying device 10 stops operation, meanwhile the cylinder pushes the movable bracket to move upward. Preferably, the upper hemisphere fuel-free area matrix powder quantitative conveying device 13 may comprise a base plate 13-1 for placing the upper half die of a final-pressing die, a pair of probes 13-2 for detecting the level of matrix powder, the base plate 13-1 is driven by a motor to rotate, the probes are on a powder-charge port of the final-pressing die, when the matrix powder reaches the probes, the upper hemisphere fuel-free area matrix powder quantitative conveying device 13 stops operation. Preferably, the upper, lower hemisphere fuel-free area shaping device may be 4 base plates uniformly distributed on a turnplate, wherein the 4 base plates may be respectively used for the fuel-free area shaping of the lower half die, placing the core sphere and covering with the upper half die, the fuel-free area shaping of the upper half die, and replacing the dies.

The green spheres which have a diameter slightly larger than a target size are pressed under a pressure no smaller than 300Mpa by the final-pressing die after shaping of the fuel-free shaping system, and finally by the green sphere pressing system, wherein the green sphere pressing system is a quasi-isostatic pressing vacuum hydraulic machine.

The processes of shaping the spherical fuel element and pressing the green spheres with the spherical fuel element forming apparatus above are as follows:
S 1: a batch of graphite as the core sphere matrix powder and the fuel-free area matrix powder is charged into the first hopper of the core sphere matrix powder quantitative conveying device and the fuel-free area matrix powder quantitative conveying device respectively;
S2: when a material canister on the material canister workstation conveying device is right below the spiral feeder, a certain amount of graphite matrix powder is added into the material canister automatically;
S3: 98% of the weight of the nuclear fuel particles containing 250gU are poured into the second hopper of the nuclear fuel particle evenly-distributing device, divided into 50 equal parts and stored in the columnar containers; the remaining 2% of the nuclear fuel particles are added into the vibrating feeder, the nuclear fuel particles in the columnar containers flow into the weighing hopper suspended at the bottom of the balance by the rotating of the columnar containers, the amount for fine adjustment is added by the vibrating feeder;
S4: when a material canister on the chain of the material canister workstation conveying device runs to be tight below the weighing hopper, the nuclear fuel particles in the weighing hopper are added in the material canister which has already contained quantitative graphite matrix powder;
S5: the chain of the material canister workstation conveying device conveys the material canister containing the nuclear fuel particles and graphite matrix powder to the workstation of the primary stirring device which stirs he nuclear fuel particles and graphite matrix powder evenly;
S6: the chain of the material canister workstation conveying device also conveys the stirred nuclear fuel particles and graphite matrix powder to the discharge molding device which fills the core sphere die with the stirred nuclear fuel particles and graphite matrix powder;
S7: the core sphere die filled with material is placed on the secondary stirring device to be stirred;
S8: the core sphere die filled with material is placed on the core sphere pressing device to be pressed into core sphere, and the pressed core spheres are placed on the bosses of the core sphere positioning-conveying device;
S9: the fuel-free area shaping device is started and the trunplate thereof rotates to 90 degrees, and drives the base plates on the turnplate, such that the lower half die in the base plate moves to the next workstation, the quantitative graphite matrix powder is conveyed to the lower half die by the lower hemisphere fuel-free area matrix powder quantitative conveying device;
S10: the core sphere positioning-conveying device is started and the mechanical arm controls the mechanical gripper to put the pre-pressed core spheres into the lower half die containing the graphite matrix powder, the core sphere is in the middle of a die cavity;
S11: the lower half die is covered with the upper half die, the trunplate of the fuel-free area shaping device is started to rotate another 90 degrees, such that the die moves to the next workstation, the upper hemisphere fuel-free area matrix powder quantitative conveying device injects quantitative graphite matrix powder into the die cavity of the die.
S12: then the dies are withdrawn from the turnplate of the fuel-free area shaping device and put into the quasi-isostatic pressing vacuum hydraulic machine to be pressed into green spheres.

The spherical fuel element forming apparatus provided by the present disclosure is distributed according to a technical process flow line operation, is compact in structure and convenient to operate. All the devices are connected rationally. The apparatus operation has a good logical relationship and easily realizes automation. With the fuel-free area shaping system, the sphere greens after being finally pressed are high in sphericity. Only few finish allowance is needed, and the waste of graphite matrix powder is reduced and the fuel element cost lowered. In addition, with the nuclear fuel particle evenly-distributing device and nuclear fuel particle accurate quantification device, the obtained ratio of nuclear fuel and matrix powder is precise, therefore the finished product rate of the spherical fuel elements prepared by the spherical fuel element forming apparatus of the present disclosure is high.

## Claims

1. A spherical fuel element forming apparatus comprising: a fuel area forming system, a fuel-free area shaping system and a green sphere pressing system connected sequentially; wherein,
the fuel area forming system is used for evenly mixing a core sphere matrix powder with nuclear fuel particles and then pressing the mixed core sphere matrix powder and nuclear fuel particles into core spheres; wherein the fuel area forming system comprises a core sphere matrix powder quantitative conveying device (1), a nuclear fuel particle evenly-distributing device (2), a nuclear fuel particle accurate quantification device (3), a primary stirring device (4), a discharge molding device (5), a secondary stirring device (7) and a core sphere pressing device (8) arranged sequentially; the core sphere matrix powder quantitative conveying device (1), the nuclear fuel particle accurate quantification device (3), the primary stirring device (4) and the discharge molding device (5) being connected by a material canister workstation conveying device (6);
wherein, the core sphere matrix powder quantitative conveying device (1) quantitatively conveys the core sphere matrix powder to the material canister workstation conveying device (6); the nuclear fuel particle evenly-distributing device (2) and nuclear fuel particle accurate quantification device (3) precisely and quantitatively convey the nuclear fuel to the material canister workstation conveying device (6); the material canister workstation conveying device (6) conveys the core sphere matrix powder and nuclear fuel to the primary stirring device (4); the primary stirring device (4) stirs the core sphere matrix powder and nuclear fuel evenly; the material canister workstation conveying device (6) conveys the core sphere matrix powder and nuclear fuel that passed through the primary stirring device (4) to the discharge molding device (5); the discharge molding device (5) fills a core sphere die (7-0) with the core sphere matrix powder and nuclear fuel that are stirred evenly; the secondary stirring device (7) stirs the core sphere matrix powder and nuclear fuel in the core sphere die (7-0); the core sphere pressing device (8) presses the core sphere matrix powder and nuclear fuel in the core sphere die into core spheres;
the fuel-free area shaping system is used for preparing a spherical fuel element from the core spheres covered by a fuel-free matrix powder; wherein the fuel-free area shaping system comprises a core sphere positioning-conveying device (9), a core sphere positioning-transferring device (12), a fuel-free area matrix powder quantitative conveying device and a fuel-free area shaping device arranged sequentially; the core sphere positioning-conveying device (9) being connected with the fuel-free area shaping device through the core sphere positioning-transferring device (12); the fuel-free area matrix powder quantitative conveying device being connected with the fuel-free area shaping device;
wherein the core sphere positioning-conveying device (9) and core sphere positioning-transferring device (12) are used for transferring the core spheres to the fuel-free area shaping device; the fuel-free area matrix powder quantitative conveying device conveys the matrix powder to the fuel-free area shaping device; the fuel-free area shaping device coats the core spheres with the matrix powder so as to prepare the spherical fuel element;
the green sphere pressing system is used for pressing the spherical fuel elements into green spheres, wherein the green sphere pressing system is a quasi-isostatic pressing vacuum hydraulic machine.

2. The spherical fuel element forming apparatus of claim 1, **characterized in that**, the core sphere matrix powder quantitative conveying device (1) comprises a first hopper for storing the core sphere matrix powder, and a spiral feeder at a bottom of the hopper, wherein a conveying amount of the core sphere matrix powder is controlled by a feeding time of the spiral feeder.

3. The spherical fuel element forming apparatus of claim 1, **characterized in that**, the nuclear fuel particle evenly-distributing device (2) comprises a rotatable second hopper (2-1) for receiving nuclear fuel, a distribution tube (2-2) connected with the second hopper (2-1) and a plurality of columnar containers (2-3) for receiving the nuclear fuel distributed by the distribution tube (2-2);
the nuclear fuel particle accurate quantification device (3) comprises a balance (3-1) with a bottom-suspension function, a weighing hopper (3-2) suspended at a bottom of the balance (3-1) and a vibrating feeder (3-3) for adding nuclear fuel into the weighing hopper (3-2) and capable of storing nuclear fuel;
wherein, the bottoms of the columnar containers (2-3) are provided with tubes, through which the nuclear fuel in the columnar containers (2-3) which are rotated in place is conveyed to the weighing hopper (3-2) by rotations of the plurality of columnar containers (2-3).

4. The spherical fuel element forming apparatus of claim 1, **characterized in that**, the material canister workstation conveying device (6) comprises an infrared position sensor, a chain driven by a motor and a plurality of material canisters (6-2) mounted on the chain; wherein the infrared position sensor is used for determining whether the opens of the plurality of material canisters (6-2) correspond to a conveying port (6-1) of the core sphere matrix powder quantitative conveying device (1), a discharge port of a weighing hopper (3-2) of the nuclear fuel particle accurate quantification device (3), the primary stirring device (4) and the discharge molding device (5) respectively.

5. The spherical fuel element forming apparatus of claim 1, **characterized in that**, the secondary stirring device (7) comprises a base plate (7-1) for placing the core sphere die (7-0) which is filled with the core sphere matrix powder and nuclear fuel, a bracket (7-3) and a rotatable stirring head (7-2) mounted on the bracket; wherein the stirring head (7-2) extends into an inner cavity of the core sphere die (7-0);
under working conditions, the stirring head (7-2) is driven by a motor to stir the core sphere matrix powder and nuclear fuel in the core sphere die (7-0); the base plate (7-1) is driven by the motor to rotate, and a rotation direction of the base plate (7-1) is opposite to that of the stirring head (7-2).

6. The spherical fuel element forming apparatus of claim 1, **characterized in that**, the core sphere pressing device (8) comprises an outer sleeve (8-1) which can move up and down, an upper punch (8-2) fixed in the outer sleeve (8-1) and an lower punch (8-3) which can move up and down; wherein an outer diameter of the core sphere die (7-0) is the same as an inner diameter of the outer sleeve (8-1), an outer diameter of the upper punch (8-2) and an outer diameter of the lower punch (8-3) respectively.

7. The spherical fuel element forming apparatus of claim 1, **characterized in that**, the core sphere positioning-conveying device (9) comprises a disc (9-1) which can be rotated positionally, wherein a plurality of bosses (9-2) for placing the core spheres are distributed evenly on the disc (9-1);
the core sphere positioning-transferring device (12) comprises a mechanical gripper (12-1) and a mechanical arm (12-2) for moving the mechanical gripper (12-1) in a horizontal or vertical direction; a moving range in the horizontal direction of the mechanical gripper (12-1) is from right above the bosses (9-2) of the core sphere positioning-conveying device (9) to right above a die of the fuel-free area shaping device.

8. The spherical fuel element forming apparatus of claim 1, **characterized in that**, the fuel-free area shaping device comprises a movable base plate for placing a die, a probe for detecting a level of matrix powder and an arc-shaped scraper for shaping the spherical fuel element; a center of the arc-shaped scraper is positioned on the vertical axis of the die.

## Patentansprüche

1. Vorrichtung zum Ausbilden eines kugelförmigen Brennelements, Folgendes umfassend: ein Ausbildungssystem im Brennstoffbereich, ein Formungssystem im brennstofffreien Bereich und ein grüne-Kugel-Presssystem, die nacheinander geschaltet sind; wobei
das Ausbildungssystem im Brennstoffbereich zum gleichmäßigen Mischen eines Kernkugelmatrixpulvers mit nuklearen Brennstoffpartikeln und anschließenden Pressen des vermischten Kernkugelmatrixpulvers und der nuklearen Brennstoffpartikel zu Kernkugeln verwendet wird; wobei das Ausbildungssystem im Brennstoffbereich eine quantitative Kernkugelmatrixpulverfördervorrichtung (1), eine nukleare-Brennpartikel-Gleichverteilungseinrichtung (2), eine nukleare-Brennpartikel-Präzisionsquantifizierungseinrichtung (3), eine primäre Rühreinrichtung (4), eine Formausgabeeinrichtung (5), eine sekundäre Rühreinrichtung (7) und eine Kernkugelpresseinrichtung (8) umfasst, die nacheinander angeordnet sind; die quantitative Kernkugelmatrixpulverfördereinrichtung (1), die nukleare-Brennpartikel-Präzisionsquantifizierungseinrichtung (3), die primäre Rühreinrichtung (4) und die Formausgabeeinrichtung (5) durch eine Materialkanisterarbeitsstationsfördereinrichtung (6) miteinander verbunden sind;
wobei die quantitative Kernkugelmatrixpulverfördereinrichtung (1) das Kernkugelmatrixpulver quantitativ zur Materialkanisterarbeitsstationsfördereinrichtung (6) befördert; die nukleare-Brennpartikel-Gleichverteilungseinrichtung (2) und die nukleare-Brennpartikel-Präzisionsquantifizierungseinrichtung (3) den nuklearen Brennstoff präzise und quantitativ zur Materialkanisterarbeitsstationsfördereinrichtung (6) befördern; die Materialkanisterarbeitsstationsfördereinrichtung (6) das Kernkugelmatrixpulver und den nuklearen Brennstoff zur primären Rühreinrichtung (4) befördert; die primäre Rühreinrichtung (4) das Kernkugelmatrixpulver und den nuklearen Brennstoff gleichmäßig rührt; die Materialkanisterarbeitsstationsfördereinrichtung (6) das Kernkugelmatrixpulver und den nuklearen Brennstoff, die durch die primäre Rühreinrichtung (4) verlaufen sind, zur Formausgabeeinrichtung (5) befördert; die Formausgabeeinrichtung (5) eine Kernkugelmatrize (7-0) mit dem gleichmäßig gerührten Kernkugelmatrixpulver und nuklearen Brennstoff füllt; die sekundäre Rühreinrichtung (7) das Kernkugelmatrixpulver und den nuklearen Brennstoff in der Kernkugelmatrize (7-0) rührt; die Kernkugelpresseinrichtung (8) das Kernkugelmatrixpulver und den nuklearen Brennstoff in der Kernkugelmatrize zu Kernkugeln presst;
das Formungssystem im brennstofffreien Bereich zum Herstellen eines kugelförmigen Brennelements aus den mit einem brennstofffreien Matrixpulver bedeckten Kernkugeln verwendet wird; wobei das Formungssystem im brennstofffreien Bereich eine Kernkugelpositionierungsfördereinrichtung (9), eine Kernkugelpositionierungsübertragungseinrichtung (12), eine quantitative Matrixpulverfördereinrichtung im brennstofffreien Bereich und eine Formungseinrichtung im brennstofffreien Bereich umfasst, die nacheinander angeordnet sind; die Kernkugelpositionierungsfördereinrichtung (9) durch die Kernkugelpositionierungsübertragungseinrichtung (12) mit der Formungseinrichtung im brennstofffreien Bereich verbunden ist; die quantitative Matrixpulverfördereinrichtung im brennstofffreien Bereich mit der Formungseinrichtung im brennstofffreien Bereich verbunden ist;
wobei die Kernkugelpositionierungsfördereinrichtung (9) und die Kernkugelpositionierungsübertragungseinrichtung (12) dazu verwendet werden, die Kernkugeln zur Formungseinrichtung im brennstofffreien Bereich zu übertragen; die quantitative Matrixpulverfördereinrichtung das Matrixpulver zur Formungseinrichtung im brennstofffreien Bereich befördert; die Formungseinrichtung im brennstofffreien Bereich die Kugeln mit dem Matrixpulver beschichtet, um das kugelförmige Brennelement herzustellen;
das grüne-Kugel-Presssystem zum Pressen der kugelförmigen Brennelemente zu grünen Kugeln verwendet wird, wobei das grüne-Kugel-Presssystem eine quasiisostatische Pressvakuumhydraulikmaschine ist.

2. Vorrichtung zum Ausbilden eines kugelförmigen Brennelements nach Anspruch 1, **dadurch gekennzeichnet, dass** die quantitative Kernkugelmatrixpulverfördereinrichtung (1) einen ersten Fülltrichter zum Lagern des Kernkugelmatrixpulvers und einen Spiralzubringer am Boden des Fülltrichters umfasst, wobei eine Fördermenge des Kernkugelmatrixpulvers durch eine Zuführungszeit des Spiralzubringers gesteuert wird.

3. Vorrichtung zum Ausbilden eines kugelförmigen Brennelements nach Anspruch 1, **dadurch gekennzeichnet, dass** die nukleare-Brennpartikel-Gleichverteilungseinrichtung (2) einen drehbaren zweiten Fülltrichter (2-1) zur Aufnahme von nuklearem Brennstoff, ein mit dem zweiten Fülltrichter (2-1) verbundenes Verteilerrohr (2-2) und mehrere säulenförmige Behälter (2-3) zur Aufnahme des vom Verteilerrohr (2-2) verteilten nuklearen Brennstoffs umfasst;
wobei die nukleare-Brennpartikel-Präzisionsquantifizierungseinrichtung (3) eine Waage (3-1) mit einer Bodenaufhängungsfunktion, einen am Boden der Waage (3-1) aufgehängten Wiegefülltrichter (3-2) und einen Schnellschwingspeiser (3-3), um nuklearen Brennstoff zum Wiegefülltrichter (3-2) hinzuzufügen und der nuklearen Brennstoff speichern kann, umfasst;
wobei die Böden der säulenförmigen Behälter (2-3) mit Rohren versehen sind, durch die der nukleare Brennstoff in den säulenförmigen Behältern (2-3), die am Platz gedreht werden, durch Drehungen der mehreren säulenförmigen Behälter (2-3) zum Wiegefülltrichter (2-3) befördert wird.

4. Vorrichtung zum Ausbilden eines kugelförmigen Brennelements nach Anspruch 1, **dadurch gekennzeichnet, dass** die Materialkanisterarbeitsstationsfördereinrichtung (6) einen Infrarotpositionssensor, eine von einem Motor angetriebene Kette und mehrere an der Kette montierte Materialkanister (6-2) umfasst; wobei der Infrarotpositionssensor dazu verwendet wird, zu bestimmen, ob die Öffnungen der mehreren Materialkanister (6-2) zu einem Förderstutzen (6-1) der quantitativen Kernkugelmatrixpulverfördereinrichtung (1), einem Auslassstutzen eines Wiegefülltrichters (3-2) der nukleare-Brennpartikel-Präzisionsquantifizierungseinrichtung (3), der primären Rühreinrichtung (4) bzw. der Formausgabeeinrichtung (5) gehören.

5. Vorrichtung zum Ausbilden eines kugelförmigen Brennelements nach Anspruch 1, **dadurch gekennzeichnet, dass** die sekundäre Rühreinrichtung (7) eine Grundplatte (7-1) zum Platzieren der Kernkugelmatrize (7-0), die mit dem Kernkugelmatrixpulver und nuklearen Brennstoff gefüllt ist, eine Halterung (7-3) und einen an der Halterung montierten drehbaren Rührkopf (7-2) umfasst;
wobei sich der Rührkopf (7-2) in einen inneren Hohlraum der Kernkugelmatrize (7-0) erstreckt;
wobei unter Betriebsbedingungen der Rührkopf (7-2) von einem Motor angetrieben wird, das Kernkugelmatrixpulver und den nuklearen Brennstoff in der Kernkugelmatrize (7-0) zu rühren; wobei die Grundplatte (7-1) vom Motor zum Drehen angetrieben wird und eine Drehrichtung der Grundplatte (7-1) der Drehrichtung des Rührkopfs (7-2) entgegengesetzt ist.

6. Vorrichtung zum Ausbilden eines kugelförmigen Brennelements nach Anspruch 1, **dadurch gekennzeichnet, dass** die Kernkugelpresseinrichtung (8) eine Außenhülle (8-1), die sich auf und ab bewegen kann, einen oberen Stempel (8-2), der in der Außenhülle (8-1) fixiert ist, und einen unteren Stempel (8-3), der sich auf und ab bewegen kann, umfasst; wobei der Außendurchmesser der Kernkugelmatrize (7-0) gleich dem Innendurchmesser der Außenhülle (8-1), dem Außendurchmesser des oberen Stempels (8-2) bzw. dem Außendurchmesser des unteren Stempels (8-3) ist.

7. Vorrichtung zum Ausbilden eines kugelförmigen Brennelements nach Anspruch 1, **dadurch gekennzeichnet, dass** die Kernkugelpositionierungsfördereinrichtung (9) eine Scheibe (9-1) umfasst, die in ihrer Position drehbar ist, wobei mehrere Löcher (9-2) zum Platzieren der Kernkugeln auf der Scheibe (9-1) gleichmäßig verteilt sind;
wobei die Kernkugelpositionierungsübertragungseinrichtung (12) einen mechanischen Greifer (12-1) und einen mechanischen Arm (12-2) zum Bewegen des mechanischen Greifers (12-1) in eine horizontale oder vertikale Richtung umfasst; wobei der Bewegungsbereich in horizontale Richtung des mechanischen Greifers (12-1) von direkt über den Löchern (9-2) der Kernkugelpositionierungsfördereinrichtung (9) zu direkt über eine Matrize der Formungseinrichtung im brennstofffreien Bereich reicht.

8. Vorrichtung zum Ausbilden eines kugelförmigen Brennelements nach Anspruch 1, **dadurch gekennzeichnet, dass** die Formungseinrichtung im brennstofffreien Bereich eine bewegliche Grundplatte zum Platzieren einer Matrize, eine Sonde zum Erfassen eines Füllstands des Matrixpulvers und einen bogenförmigen Schaber zum Formen des kugelförmigen Brennelements umfasst; wobei die Mitte des bogenförmigen Schabers an der vertikalen Achse der Matrize positioniert ist.

## Revendications

1. Appareil de formation d'éléments de combustible sphériques, comprenant :
un système de formation de zone de combustible, un système de mise en forme de zone dépourvue de combustible et un système de pressage de sphères crues reliés séquentiellement ; dans lequel,
le système de formation de zone de combustible est utilisé pour mélanger uniformément une poudre matricielle de sphère noyau avec des particules de combustible nucléaire et puis presser la poudre matricielle de sphère noyau et les particules de combustible nucléaire mélangées en des sphères noyaux ; dans lequel le système de formation de zone de combustible comprend un dispositif de transport quantitatif de poudre matricielle de sphère noyau (1), un dispositif de distribution uniforme de particules de combustible nucléaire (2), un dispositif de quantification exacte de particules de combustible nucléaire (3), un dispositif d'agitation primaire (4), un dispositif de moulage d'évacuation (5), un dispositif d'agitation secondaire (7) et un dispositif de pressage de sphères noyaux (8) agencés séquentiellement ; le dispositif de transport quantitatif de poudre matricielle de sphère noyau (1), le dispositif de quantification exacte de particules de combustible nucléaire (3), le dispositif d'agitation primaire (4) et le dispositif de moulage d'évacuation (5) étant reliés par un dispositif de transport de station de travail de cartouche de matériau (6) ;
dans lequel, le dispositif de transport quantitatif de poudre matricielle de sphère noyau (1) transporte quantitativement la poudre matricielle de sphère noyau jusqu'au dispositif de transport de station de travail de cartouche de matériau (6) ; le dispositif de distribution uniforme de particules de combustible nucléaire (2) et le dispositif de quantification exacte de particules de combustible nucléaire (3) transportent précisément et quantitativement le combustible nucléaire jusqu'au dispositif de transport de station de travail de cartouche de matériau (6) ; le dispositif de transport de station de travail de cartouche de matériau (6) transporte la poudre matricielle de sphère noyau et le combustible nucléaire jusqu'au dispositif d'agitation primaire (4) ; le dispositif d'agitation primaire (4) agite la poudre matricielle de sphère noyau et le combustible nucléaire uniformément ; le dispositif de transport de station de travail de cartouche de matériau (6) transporte la poudre matricielle de sphère noyau et le combustible nucléaire qui sont passés par le dispositif d'agitation primaire (4) jusqu'au dispositif de moulage d'évacuation (5) ; le dispositif de moulage d'évacuation (5) remplit une matrice de sphère noyau (7-0) avec la poudre matricielle de sphère noyau et le combustible nucléaire qui sont agités uniformément ; le dispositif d'agitation secondaire (7) agite la poudre matricielle de sphère noyau et le combustible nucléaire dans la matrice de sphère noyau (7-0) ; le dispositif de pressage de sphères noyaux (8) presse la poudre matricielle de sphère noyau et le combustible nucléaire dans la matrice de sphère noyau en sphères noyaux ;
le système de mise en forme de zone dépourvue de combustible est utilisé pour préparer un élément de combustible sphérique à partir des sphères noyaux couvertes par une poudre matricielle dépourvue de combustible ; dans lequel le système de mise en forme de zone dépourvue de combustible comprend un dispositif de transport-positionnement de sphères noyaux (9), un dispositif de transfert-positionnement de sphères noyaux (12), un dispositif de transport quantitatif de poudre matricielle de zone dépourvue de combustible et un dispositif de mise en forme de zone dépourvue de combustible agencés séquentiellement ; le dispositif de transport-positionnement de sphères noyaux (9) étant relié au dispositif de mise en forme de zone dépourvue de combustible par le biais du dispositif de transfert-positionnement de sphères noyaux (12) ; le dispositif de transport quantitatif de poudre matricielle de zone dépourvue de combustible étant relié au dispositif de mise en forme de zone dépourvue de combustible ;
dans lequel le dispositif de transport-positionnement de sphères noyaux (9) et le dispositif de transfert-positionnement de sphères noyaux (12) sont utilisés pour transférer les sphères noyaux au dispositif de mise en forme de zone dépourvue de combustible ; le dispositif de transport quantitatif de poudre matricielle de zone dépourvue de combustible transporte la poudre matricielle jusqu'au dispositif de mise en forme de zone dépourvue de combustible ; le dispositif de mise en forme de zone dépourvue de combustible enduit les sphères noyaux avec la poudre matricielle afin de préparer l'élément de combustible sphérique ;
le système de pressage de sphères crues est utilisé pour presser les éléments de combustible sphériques en sphères crues, dans lequel le système de pressage de sphères crues est une machine hydraulique à vide de pressage quasi-isostatique.

2. Appareil de formation d'éléments de combustible sphériques selon la revendication 1, **caractérisé en ce que** le dispositif de transport quantitatif de poudre matricielle de sphère noyau (1) comprend une première trémie pour stocker la poudre matricielle de sphère noyau, et un organe d'alimentation en spirale à un fond de la trémie, dans lequel une quantité de transport de la poudre matricielle de sphère noyau est commandée par un temps d'alimentation de l'organe d'alimentation en spirale.

3. Appareil de formation d'éléments de combustible sphériques selon la revendication 1, **caractérisé en ce que** le dispositif de distribution uniforme de particules de combustible nucléaire (2) comprend une seconde trémie rotative (2-1) pour recevoir un combustible nucléaire, un tube de distribution (2-2) relié à la seconde trémie (2-1) et une pluralité de contenants en colonne (2-3) pour recevoir le combustible nucléaire distribué par le tube de distribution (2-2) ;
le dispositif de quantification exacte de particules de combustible nucléaire (3) comprend une balance (3-1) avec une fonction de suspension en fond, une trémie de pesage (3-2) suspendue à un fond de la balance (3-1) et un organe d'alimentation vibratoire (3-3) pour ajouter un combustible nucléaire dans la trémie de pesage (3-2) et capable de stocker un combustible nucléaire ;
dans lequel, les fonds des contenants en colonne (2-3) sont pourvus de tubes, à travers lesquels le combustible nucléaire dans les contenants en colonne (2-3), qui sont mis en place par rotation, est transporté jusqu'à la trémie de pesage (3-2) par rotations de la pluralité de contenants en colonne (2-3).

4. Appareil de formation d'éléments de combustible sphériques selon la revendication 1, **caractérisé en ce que** le dispositif de transport de station de travail de cartouche de matériau (6) comprend un capteur de position infrarouge, une chaîne entraînée par un moteur et une pluralité de cartouches de matériau (6-2) montées sur la chaîne ; dans lequel le capteur de position infrarouge est utilisé pour déterminer si les ouvertures de la pluralité de cartouches de matériau (6-2) correspondent à un orifice de transport (6-1) du dispositif de transport quantitatif de poudre matricielle de sphère noyau (1), un orifice d'évacuation d'une trémie de pesage (3-2) du dispositif de quantification exacte de particules de combustible nucléaire (3), au dispositif d'agitation primaire (4) et au dispositif de moulage d'évacuation (5) respectivement.

5. Appareil de formation d'éléments de combustible sphériques selon la revendication 1, **caractérisé en ce que** le dispositif d'agitation secondaire (7) comprend une plaque de base (7-1) pour placer la matrice de sphère noyau (7-0) qui est remplie avec la poudre matricielle de sphère noyau et le combustible nucléaire, un support (7-3) et une tête d'agitation rotative (7-2) montée sur le support ; dans lequel la tête d'agitation (7-2) s'étend dans une cavité intérieure de la matrice de sphère noyau (7-0) ;
dans des conditions de travail, la tête d'agitation (7-2) est entraînée par un moteur pour agiter la poudre matricielle de sphère noyau et le combustible nucléaire dans la matrice de sphère noyau (7-0) ; la plaque de base (7-1) est entraînée par le moteur pour entrer en rotation, et une direction de rotation de la plaque de base (7-1) est opposée à celle de la tête d'agitation (7-2).

6. Appareil de formation d'éléments de combustible sphériques selon la revendication 1, **caractérisé en ce que** le dispositif de pressage de sphères noyaux (8) comprend un manchon extérieur (8-1) qui peut se déplacer vers le haut et vers le bas, un poinçon supérieur (8-2) fixé dans le manchon extérieur (8-1) et un poinçon inférieur (8-3) qui peut se déplacer vers le haut et vers le bas ; dans lequel un diamètre extérieur de la matrice de sphère noyau (7-0) est le même qu'un diamètre intérieur du manchon extérieur (8-1), un diamètre extérieur du poinçon supérieur (8-2) et un diamètre extérieur du poinçon inférieur (8-3), respectivement.

7. Appareil de formation d'éléments de combustible sphériques selon la revendication 1, **caractérisé en ce que** le dispositif de transport-positionnement de sphères noyaux (9) comprend un disque (9-1) qui peut être mis en rotation de façon positionnelle, dans lequel une pluralité de bossages (9-2) pour placer les sphères noyaux sont distribués uniformément sur le disque (9-1) ;
le dispositif de transfert-positionnement de sphères noyaux (12) comprend un organe de préhension mécanique (12-1) et un bras mécanique (12-2) pour déplacer l'organe de préhension mécanique (12-1) dans une direction horizontale ou verticale ; une plage de déplacement dans la direction horizontale de l'organe de préhension mécanique (12-1) est depuis la droite au-dessus des bossages (9-2) du dispositif de transport-positionnement de sphères noyaux (9) jusqu'à la droite au-dessus d'une matrice du dispositif de mise en forme de zone dépourvue de combustible.

8. Appareil de formation d'éléments de combustible sphériques selon la revendication 1, **caractérisé en ce que** le dispositif de mise en forme de zone dépourvue de combustible comprend une plaque de base mobile pour placer une matrice, une sonde pour détecter un niveau de poudre matricielle et un racloir en forme d'arc pour mettre en forme l'élément de combustible sphérique ; un centre du racloir en forme d'arc est positionné sur l'axe vertical de la matrice.
